(19) Europäisches Patentamt
European Patent Office
Office européen des brevets

(11) **EP 1 979 529 B1**

(12) **FASCICULE DE BREVET EUROPEEN**

(45) Date de publication et mention
de la délivrance du brevet:
**25.07.2012 Bulletin 2012/30**

(51) Int Cl.:
***D06N 3/12*** *(2006.01)*     ***C09D 183/04*** *(2006.01)*
***B60R 21/16*** *(2006.01)*

(21) Numéro de dépôt: **06830671.1**

(22) Date de dépôt: **15.12.2006**

(86) Numéro de dépôt international:
**PCT/EP2006/069789**

(87) Numéro de publication internationale:
**WO 2007/071631 (28.06.2007 Gazette 2007/26)**

(54) **SUPPORT FIBREUX COMPRENANT UN REVETEMENT SILICONE**

FASERHALTIGER TRÄGER MIT SILICONBESCHICHTUNG

FIBROUS SUPPORT COMPRISING A SILICONE COATING

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **19.12.2005 FR 0512886**

(43) Date de publication de la demande:
**15.10.2008 Bulletin 2008/42**

(73) Titulaire: **Bluestar Silicones France
69486 Lyon Cedex 03 (FR)**

(72) Inventeurs:
• **LAFAYSSE, Francis
F-69005 Lyon (FR)**
• **DUMONT, Laurent
F-69510 Messimy (FR)**
• **BORDES, Bertrand
F-69006 Lyon (FR)**

(56) Documents cités:
**EP-A- 1 205 595     FR-A- 2 861 753
US-B1- 6 354 620**

**Description**

La présente invention concerne un support fibreux comprenant un revêtement silicone, constitué d'au moins deux couches successives de type silicone. La première couche , celle en contact avec le support fibreux est une couche à base de composition silicone élastomère. La deuxième couche, celle en contact avec la première couche, est une couche mince obtenue par réticulation d'une émulsion aqueuse de polyorganosiloxane reticulable par réaction de polyaddition comprenant un fort taux de charges. L'invention concerne également un procédé de fabrication de tels support fibreux revêtus, notamment des sac de protection gonflable de type « air bag ».

## ART ANTERIEUR

Le domaine général de l'invention est celui de l'utilisation de compositions silicones, en particulier celles du type bicomposant ou multicomposant, réticulables par des réactions de polyaddition pour produire un élastomère en couche mince en tant que revêtement de différents support fibreux, tels que par exemple des supports fibreux, tissés, tricotés ou non tissés.

De tels revêtements en silicone sont généralement obtenus par enduction du supports fibreux puis durcissement découlant de la polyaddition des groupements insaturés (alcényles, e.g. Si-Vi) d'un polyorganosiloxane sur des hydrogènes du même ou d'un autre polyorganosiloxane.

Il existe pour de nombreux supports fibreux, tel que notamment dans le domaine des sacs de protection gonflable de type « air bag », des manchons flexibles d'étanchéité, des vêtements ou des tissus architecturaux, une nécessité de conférer à ceux-ci, par l'intermédiaire d'un revêtement silicone, à la fois des propriétés d'étanchéité et un faible coefficient de frottement afin que la surface du support ne soit pas rêche et abrasive au toucher. A ces propriétés, s'ajoute également la nécessité d'obtenir un revêtement silicone ayant les autres propriétés requises, au niveau des propriétés mécaniques, telle que la cohésion, la flexibilité, la souplesse, la résistance à l'effilochage, la résistance à la déchirure, ainsi que l'aptitude au froissement.

Dans ces applications il est souvent difficile d'obtenir un bon compromis entre ces propriétés.

Actuellement, de nombreux véhicules automobiles sont équipés d'un capteur d'accélération qui mesure les décélérations du véhicule. Lorsque la valeur de référence de la décélération est dépassée, une pastille explosive amorce la combustion d'une charge complémentaire, puis celle du combustible solide ; celui-ci se transforme en gaz et gonfle le coussin. Pour plus de détails sur ces sacs de protection individuels ou airbag ou coussin gonflable, on peut se référer notamment au brevet français FR-A-2 668 106.

Ces derniers sont généralement formés par une toile en fibre synthétique, par exemple en polyamide, recouverte sur au moins l'une de ces faces d'une couche d'une composition silicone. Ces compositions silicones ont donc trouvé un débouché important dans le revêtement des matériaux souples - tissés, tricotés ou non tissés - utilisés pour la fabrication de sacs de protection individuelle d'occupant de véhicules.

Les airbags frontaux peuvent être adaptatifs et se déployer proportionnellement à la violence du choc. Le système de protection est maintenant de plus en plus complété par des airbags latéraux, ou rideaux. Pour ce type d'airbags, il est important que les sacs de protection restent gonflés le plus longtemps possibles, notamment lorsque le véhicule automobile subit un choc entraînant celui-ci dans une série de tonneaux (roll-over). Il est donc important que ces sacs de protection soient parfaitement étanches dans cette optique.

Pour augmenter l'étanchéité des sacs de protection gonflable on peut utiliser une technique de tissage particulière des sacs, tissés en une pièce (« one piece woven »), comme cela est décrit dans les demandes GB2383304 et GB2397805.

Le sac de protection obtenu est alors recouvert, sur sa surface externe, d'une quantité de composition silicone assez importante de manière à assurer une bonne étanchéité vis-à-vis de l'air.

Toutefois, l'application d'une telle quantité d'une composition silicone à la surface des sacs de protection conduit à l'obtention d'une surface rêche et abrasive ayant un toucher « happant » et un haut coefficient de frottement. Une telle surface pose de nombreux problèmes lors du pliage du sac, puis lors de son gonflement, entraînant une difficulté de déploiement ou une orientation préférentielle non désirée lors du déploiement, une frottement excessive avec les éléments du véhicule automobile, tel que le verre des fenêtres latérale, ainsi que des risques de blessures pour le passager dont la tête ou les membres viennent frotter sur le sac déployé.

US-B-6354620 décrit un support fibreux revêtu pour deux couches successive de type silicone pour sacs gonflables ayant bonnes coefficients de frottement dynamique.

Il est donc nécessaire de mettre au point un revêtement silicone permettant d'apporter aux supports fibreux, notamment pour les sacs de protection, l'étanchéité nécessaire qui ne soit pas rêche et abrasive ayant un toucher plus doux et un bas coefficient de frottement.

## INVENTION

La demanderesse a mis en évidence un revêtement silicone constitué de deux couches successives pour des supports fibreux, remédiant aux inconvénients mentionnés précédemment.

La présente invention concerne ainsi une surface d'un support fibreux, tel que des sacs de protection gonflable, de type air-bag, comprenant deux couches successives de type silicone. La première couche , celle en contact avec le support fibreux est une couche à base de composition silicone élastomère. La deuxième couche, celle en contact avec la première couche, est une couche mince obtenue par réticulation d'une émulsion aqueuse de polyorganosiloxane reticulable par réaction de polyaddition comprenant un fort taux de charges.

Le revêtement silicone obtenu est propre à conférer d'excellentes qualités mécaniques aux supports fibreux, tel que la cohésion, la flexibilité, la souplesse, la résistance à l'effilochage, la résistance à la déchirure et au peignage, ainsi que l'aptitude au froissement, tout en obtenant un excellent compromis au niveau de des propriétés d'étanchéité, notamment vis-à-vis de l'air, et des propriétés de résistance à l'abrasion (test scrub) et de coefficient de frottement représentatif d'un faible coefficient de frottement. La solution de l'invention permet par ailleurs d'obtenir des supports fibreux ayant également les autres propriétés attendues et requises, telles qu'une bonne résistance au feu et à la température.

Grâce aux propriétés et caractéristiques indiquées ci-dessus, on peut réaliser des sacs gonflables de protection individuelle des occupants d'un véhicule à partir de tissus à contexture ouverte comme décrits ci-dessus, en particulier tissus de polyamide ou de polyester, qui une fois enduits, ont un bon coefficient de frottement et une bonne résistance au peignage et à la déchirure, possédant par ailleurs des propriétés optimales notamment d'imperméabilité, de protection thermique, de porosité, de pliabilité, de résistance au feu. Cela permet de réaliser des sacs gonflables plus performants et moins coûteux que les sacs réalisés à partir des tissus enduits de l'art antérieur.

La solution selon l'invention permet également un meilleur control de l'épaisseur voulue en revêtement silicone sur le support fibreux, garantissant ainsi les meilleures performances possibles en matière d'imperméabilité et de caractéristiques de toucher.

## EXPOSÉ DETAILLE DE L'INVENTION

La présente invention concerne ainsi un article comprenant au moins une surface de support fibreux revêtue par au moins deux couches successive de type silicone :

- une couche interne (1), en contact avec le support fibreux, à base de composition silicone élastomère ; et
- une couche externe (2), ayant une masse surfacique comprise entre 1 et 20 g/m$^2$, en contact avec la couche interne (1), obtenue par réticulation d'une émulsion aqueuse de polyorganosiloxane reticulable par réaction de polyaddition, comprenant :

A) au moins un polyorganosiloxane (POS) présentant par molécule au moins deux groupements fonctionnels insaturés de type alcényle en $C_2$-$C_6$, liés au silicium,

(B) au moins un polyorganosiloxane (POS) présentant par molécule au moins deux, parfois trois, atomes d'hydrogène liés au silicium,

(C) au moins un tensioactif,

(c') un alkyl-siloxane modifié par un polyoxide d'alkyléne, et de préférence l'heptaméthyltrisiloxane modifié polyalkyléneoxide.

(D) au moins un catalyseur de réticulation,

(E) au moins 10 à 80 % en poids d'une charge, par rapport au poids sec de la couche externe après réticulation, ladite charge présente une granulométrie d50 comprise entre 0,5 et 50 $\mu$m; et

(F) de l'eau,

(G) éventuellement au moins une résine polyorganosiloxane (POS) comportant éventuellement au moins un, préférentiellement au moins deux, groupement(s) alcényle(s),

(H) éventuellement au moins un inhibiteur de réticulation,

(I) éventuellement au moins un promoteur d'adhérence, et

(J) éventuellement au moins un additif de formulation.

La présente invention vise tout produit susceptible d'être obtenu par dépôt sur un support fibreux des couches silicones mentionnés précédemment. A titre d'exemples, on peut citer les sacs gonflables utilisés pour la protection des occupants d'un véhicule, en anglais "air bag", les tresses de verre, telle que les gaines en tissu de verre de protection thermique et diélectrique pour fil électrique, les bandes transporteuses, les tissus coupe-feu, les isolants thermiques, les compensateurs, tels que les manchons flexibles d'étanchéité pour tuyauterie, les vêtements ou bien encore des matériaux souples destinés à être utilisés dans l'architecture textile intérieure ou extérieure, tels que les bâches, les tentes, les stands, et les chapiteaux.

Les supports fibreux destinés à être enduits peuvent être par exemple des tissés, des non-tissés ou des tricots ou plus généralement tout support fibreux comprenant des fibres et/ou des fibres choisis dans le groupe de matériaux comprenant : le verre, la silice, les métaux, la céramique, le carbure de silicium, le carbone, le bore ,les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les polyimides, les caoutchoucs synthétiques, l'alcool polyvinylique, les aramides, les fluorofibres, les phénoliques ...

Les sacs de protection gonflable utilisés préférentiellement dans le cadre de l'invention sont tissés en une pièce (« one pièce woven »), tels que mentionnés dans les demandes GB2383304 et GB2397805. Ces sacs peuvent être à base de divers matériaux fibreux, tel que par exemple les polyamides ou les polyesters.

Les polyorganosiloxanes (POS), constituants principaux des compositions selon l'invention, peuvent être linéaires, ramifiés ou réticulés, et comporter des radicaux hydrocarbonés et des groupements réactifs comme par exemple des groupements alcényles et/ou des atomes d'hydrogène. Les compositions organopolysiloxanes sont amplement décrites dans la littérature et notamment dans l'ouvrage de Walter NOLL "Chemistry and Technology of Silicones", Academic Press, 1968, 2ème édition, pages 386 à 409.

Il est possible d'utiliser une grande variété de compositions organopolysiloxanes bicomposantes ou monocomposantes réticulant à température ambiante ou à la chaleur par des réactions de polyaddition, essentiellement par réaction de groupements hydrogénosilylés sur des groupements alcénylsilylés, en présence généralement d'un catalyseur métallique, de préférence au platine. Ces compositions sont décrites par exemple dans les brevets US-A-3 220 972, 3 284 406, 3 436 366, 3 697 473 et 4 340 709.

Les organopolysiloxanes entrant dans ces compositions sont en général constitués par des couples à base d'une part d'au moins un polysiloxane linéaire, ramifié ou réticulé comprenant au moins deux groupements alcényles, et d'autre part d'au moins un hydrogéno-polysiloxane linéaire, ramifié ou réticulé comprenant au moins deux, parfois au moins trois, atomes d'hydrogène.

Les polyorganosiloxanes (A) réticulables par polyaddition peuvent présenter des motifs, notamment au moins deux motifs, de formule (I) et éventuellement au moins une partie des autres motifs sont des motifs de formule moyenne (II):

$$W_a Y'_b SiO_{\frac{4-(a+b)}{2}} \qquad (I)$$

$$Y_c SiO_{\frac{4-c}{2}} \qquad (II)$$

formules dans lesquelles :

- W est un groupe alcényle, de préférence vinyle ou allyle,
- les symboles Y, identiques ou différents, représentent :
- un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
- un radical cycloalkyle contenant entre 5 et 8 atomes de carbone cycliques, éventuellement substitué,
- un radical aryle contenant entre 6 et 12 atomes de carbone éventuellement substitué, et/ou
- une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles.
- a est 1 ou 2, de préférence égal à 1, b est 0, 1 ou 2 et a + b = 1, 2 ou 3, et
- c = 0, 1, 2 ou 3.

Les composé polyorganosiloxanes (B) peuvent présenter des motifs, au moins deux ou au moins trois selon les cas, de formule (III) et éventuellement au moins une partie des autres motifs sont des motifs de formule moyenne (IV):

$$H Y_c SiO_{(3-c)/2} \qquad (III)$$

$$Y_g SiO_{(4-g)/2} \qquad (IV)$$

dans lesquelles :

- H représente un atome d'hydrogène,
- les symboles Y, identiques ou différents, sont définis précédemment.
- c = 0, 1 ou 2, et
- g= 0, 1, 2 ou 3.

A titre illustratif, on peut citer les radicaux organiques Y, directement liés aux atomes de silicium : les groupes méthyle ; éthyle ; propyle ; isopropyle ; butyle ; isobutyle ; n-pentyle ; t-butyle chlorométhyle ; dichlorométhyle ; $\alpha$-chloroéthyle , $\alpha,\beta$-dichloroéthyle ; fluorométhyle ; difluorométhyle $\alpha,\beta$-difluoroéthyle ; trifluoro-3,3,3 propyle trifluorocyclopropyle ; trifluoro-4,4,4 butyle ; hexafluoro-3,3,4,4,5,5 pentyle ; $\beta$-cyanoéthyte ; $\beta$-cyanopropyte ; phényle ; p-chlorophénylem- ; chlorophényle ; dichloro-3,5 phényle ; trichlorophényletétrachlorophényle o-, p-, ou m-tolyle ; $\alpha$-$\alpha$-$\alpha$-trifluorotolyle ; xylyles comme diméthyl-2,3 phényle,diméthyl-3,4 phényle.

Préférentiellement, les radicaux organiques Y liés aux atomes de silicium sont des radicaux méthyle, phényle, ces radicaux pouvant être éventuellement halogénés ou bien encore des radicaux cyanoalkyle.

On préfère notamment un POS (A) correspondant à une huile polydiméthylsiloxane bloquée à chacune des extrémités des chaînes par un motif $(CH_3)_2ViSiO_{1/2}$ ($M^{vi}$).

On préfère notamment un PS (B) correspondant à une huile poly(diméthyl) (hydrogénométhyl) siloxane bloquée à chacune des extrémités des chaînes par un motif $(CH_3)_2HSiO_{1/2}$ ($M^H$).

Les émulsions selon l'invention peuvent comprendre en outre, au moins une résine silicone (G) de type une résine polyorganosiloxane (POS) éventuellement comportant au moins un, préférentiellement au moins 2, groupement (s) alcényles(s), notamment non hydroxylé. Cette résine peut notamment correspondre à la définition des polyorganosiloxanes (A) mentionnées ci-dessus.

Ces résines silicones sont des polymères POS ramifiés bien connus et disponibles dans le commerce. Elles présentent, par molécule, au moins deux motifs différents choisis parmi ceux de formule $R^1_3SiO_{1/2}$ (motif M), $R^1_2SiO_{2/2}$ (motif D), $R^1SiO_{3/2}$ (motif T) et $SiO_{4/2}$ (motif Q).

Les radicaux $R^1$ sont identiques ou différents et sont choisis parmi les radicaux alkyles linéaires ou ramifiés, les radicaux vinyle, phényle, et/ou trifluoro-3,3,3 propyle. De préférence les radicaux alkyles présentent de 1 à 6 atomes de carbone inclus. Plus particulièrement, on peut citer comme radicaux $R^1$ alkyles, les radicaux méthyle, éthyle, isopropyle, tertiobutyle et n-hexyle.

Avantageusement, dans les émulsions de type polyaddition, au moins une partie des radicaux $R^1$ sont des restes vinyles, avec une teneur pondérale en Vi notamment comprise entre 0,1 et 2 %. Ces fonctions vinylées sont portées par les motifs M, D ou T. Comme exemple, on peut citer les résines MDQ vinylées, telle que $MD^{Vi}Q$, ou encore des résines $MM^{Vi}Q$ ($D^{vi}$ est représenté par la formule $(R^1_2SiO_{2/2})$, dont un radical $R^1$ correspond à un reste vinyle ; $M^{vi}$ est représenté par la formule $R^1_3SiO_{1/2}$ dont un radical $R^1$ correspond à un reste vinyle).

On préfère notamment une résine (G) correspondant à une résine $MD^{Vi}Q$, éventuellement en solution dans une huile polydiméthylsiloxane bloquée à chacune des extrémités des chaînes par un motif $(CH_3)_2ViSiO_{1/2}$.

Le POS (A) pourra avoir une viscosité dynamique au moins égale à 200 mPa.s et de préférence inférieure à 500000 mPa.s, préférentiellement comprise entre 3500 et 100000 mPa.s.

Le POS (B) peut présenter une viscosité dynamique notamment inférieure à 300.mPa.s, préférentiellement comprise entre 1 et 50 mPa.s.

La résine POS (G) pourra avoir une viscosité dynamique comprise entre 200 et 500.000 mPa.s, préférentiellement comprise entre 3000 et 100000 mPa.s.

Toutes les viscosités dont il est question dans le présent mémoire correspondent à une grandeur de viscosité dynamique qui est mesurée, de manière connue en soi, à 25°C, avec un appareil de type Brookfield.

Concernant les tensio-actifs (C), ils peuvent être anioniques, cationiques ou non ioniques. En particulier, il peut s'agir d'un ou plusieurs alcools gras polyéthoxylés. De préférence, les tensio-actifs sont non ioniques. Le rôle du tensio-actif sera notamment d'affiner la granulométrie de l'émulsion, éventuellement d'améliorer sa stabilité, et également d'assurer son mouillage sur la première couche de silicone.

Les agents tensio-actifs non-ioniques peuvent être choisis parmi les acides gras alcoxylés, les alcools polyvinyliques, les alkylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène ainsi que les alkylglucosides, les alkylpolyglucosides, les sucroéthers, les sucroesters, les sucroglycérides, les esters de sorbitan, et les composés éthoxylés de ces dérivés de sucres. Ils présentent avantageusement un HLB d'au moins 10.

Les agents tensio-actifs anioniques peuvent être choisis parmi les alkylbenzène sulfonates, les alkylsulfates, les alkyléthersulfates, les alkylaryléthersulfates, les dialkylsulfosuccinates, les alkylphosphates, les étherphosphates, de métaux alcalins. Ils présentent avantageusement un HLB d'au moins 10.

Parmi les agents tensio-actifs cationiques on peut citer les amines grasses aliphatiques ou aromatiques, les amides gras aliphatiques, les dérivés d'ammonium quaternaire. Ils présentent avantageusement un HLB d'au moins 10.

Le tensio-actif, utilisé seul ou en mélange, est notamment choisi en fonction de la nature des POS utilisés. Un alkyl-siloxane modifié par un polyoxide d'alkylène est particulièrement utile dans le cadre de l'invention.

Comme catalyseur de réticulation, on peut notamment choisir un catalyseur consistant en au moins un métal, ou composé, du groupe du platine qui sont également bien connus. Les métaux du groupe du platine sont ceux connus sous le nom de platinoïdes, appellation qui regroupe, outre le platine, le ruthénium, le rhodium, le palladium, l'osmium et l'iridium. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes (Karstedt) du palatine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (III), calculée en poids de platine-métal, est généralement comprise entre 2 et 400 ppm, de préférence entre 5 et 200 ppm basés sur le poids total des polyorganosiloxanes (I) et (II).

Comme exposé précédemment, l'émulsion comprend de 10 à 80 % en poids d'une charge, par rapport au poids sec de la couche externe après réticulation, ladite charge présente une granulométrie d50 comprise entre 0,5 et 50 $\mu$m, préférentiellement comprise entre 1 et 10 $\mu$m. Cette granulométrie d50 correspond à la taille de particule sous laquelle se trouve 50% de la distribution en poids.

L'émulsion selon l'invention peut notamment comprendre deux types de charges (E) ayant des granulométries différentes. Par exemple, un type de charge (E) peut présenter une granulométrie comprise entre 0,5 et 5 $\mu$m et un autre type de charge (E) peut présenter une granulométrie comprise entre 10 et 50 $\mu$m.

Comme charge de ce type, on peu notamment citer les charges comprises dans le groupe comprenant : les silices, le carbonate de calcium, le quartz broyé, les argiles calcinées, les terres de diatomées, le noir de carbone, le dioxyde de titane, l'oxyde d'aluminium, l'alumine hydratée, la vermiculite expansée, la vermiculite non expansée, l'oxyde de zinc, le mica, le talc, l'oxyde de fer, le sulfate de baryum et la chaux éteinte. Ces charges peuvent être incorporées telles quelles ou traitées en surface. Ces charges peuvent être éventuellement sous forme de dispersion aqueuse (slurry).

On peut généralement utiliser de 20 à 60 % en poids, de préférence de 30 à 50 % en poids de charges (E), par rapport au poids sec de la couche externe après réticulation (ie. phase silicone).

Comme inhibiteur de réticulation (H), on peut utiliser ceux classiquement mis en oeuvre dans les réactions de réticulation de POS. Ils peuvent être notamment choisi parmi les composés suivants :

- les polyorganosiloxanes substitués par au moins un alcényle pouvant se présenter éventuellement sous forme cyclique, le tétraméthylvinyl-tétrasiloxane étant particulièrement préféré;
- la pyridine,
- les phosphines et les phosphites organiques,
- les amides insaturés,
- les maléates alkylés, et
- les alcools acétyléniques.

Comme alcools acétyléniques, (Cf. FR-B-1 528 464 et FR-A-2 372 874), qui font partie des bloqueurs thermiques de réaction d'hydrosilylation préférés, ont peut notamment choisir l'éthynyl-1-cyclohexanol-1, le méthyl-3 dodécyne-1 ol-3, le triméthyl-3,7,11 dodécyne-1 ol-3, le diphényl-1,1 propyne-2 ol-1, l'éthyl-3 éthyl-6 nonyne-1 ol-3, le méthyl-2 butyne-3 ol-2, le méthyl-3 pentadécyne-1 ol-3, le diallylmaléate ou dérivés du diallylmaléate.

Un tel inhibiteur peut être présent à raison de 3 000 ppm au maximum, de préférence à raison de 100 à 1000 ppm par rapport au poids total des organopolysiloxanes (I) et (II).

On peut éventuellement utiliser n'importe quel promoteur d'adhérence (I) habituellement utilisé dans le domaine. Par exemple, on pourra utiliser :

- un silane ou organosiloxane vinylé seul ou partiellement hydrolysé ainsi que l'un de ses produits de réaction,
- un silane ou organosiloxane fonctionnalisé par une fonction epoxy seul ou partiellement hydrolysé ainsi que l'un de ses produits de réaction,
- un silane ou organosiloxane amino fonctionnel seul ou partiellement hydrolysé ainsi que l'un de ses produits de réaction,
- un silane ou organosiloxane fonctionnalisé par un radical anhydride seul ou partiellement hydrolysé ainsi que l'un de ses produits de réaction, et/ou
- un chélate de type titanate de butyle.

En particulier, ce promoteur d'adhérence pourra être sélectionné parmi :

- au moins un hydrocolloïde protecteur, de préférence l'alcool polyvinylique, lequel peut également jouer le rôle de tensioactif en combinaison ou non avec d'autres émulsifiants,
- des silanes ou polyorganosiloxanes spécifiques, à savoir hydroxylés et amino-salifiés, ou bien encore
- un hydrocolloïde protecteur, de préférence de l'alcool polyvinylique, et des silanes et/ou polyorganosilixanes hydroxylés et amino-salifiés.

L'émulsion selon l'invention peut comporter également d'autres additifs classiques de formulation (J), tels que des catalyseurs de condensation, des colorants, des agents de la résistance au feu, des bactéricides, des pigments minéraux ou organiques, des épaississants organiques (polyoxyde d'éthylène et copolymères dérivés, gomme xanthane, hydroxyéthylcellulose, polymères acryliques ou cationiques ...) ou minéraux (laponite), des anti-oxydants, et des agents de fixation du pH, des matières minérales silicieuses ou non silicieuses notamment de renfort, de bourrage ou de propriétés spécifiques.

Un agent de fixation du pH utilisé dans l'émulsion permet un maintien du pH à des valeurs alcalines par exemple comprises entre 7 et 8. Ce système de maintien du pH peut être par exemple du bicarbonate de soude.

Eventuellement, l'émulsion peut contenir en outre des charges minérales de renfort ou de bourrage, qui sont choisies de préférence parmi les silices de combustion et les silices de précipitation. Elles ont une surface spécifique, mesurée selon les méthodes BET, d'au moins 50 $m^2/g$, notamment comprise entre 50 et 400 $m^2/g$, de préférence supérieure à 70 $m^2/g$, une dimension moyenne des particules primaires inférieure à 0,1 micromètre ($\mu$m) et une densité apparente inférieure à 200 g/litre.

Ces silices hydrophiles sont de préférence incorporées telles quelles dans la phase aqueuse (continue) de l'émulsion. Selon une variante, ces silices peuvent éventuellement être traitées par un ou des composés organosiliciques habituellement utilisés pour cet usage. Selon une autre variante, les silices peuvent être prédispersées dans l'huile silicone. Parmi ces composés, figurent les méthylpolysiloxanes tels que l'hexaméthyldisiloxane, l'octaméthylcyclotétrasiloxane, les méthylpolysilazanes tels que l'hexaméthyldisilazane, l'hexaméthylcyclotrisilazane, les chlorosilanes tels que le diméthyl-dichlorosilane, le triméthylchlorosilane, le méthylvinyldichlorosilane, le diméthylvinylchlorosilane, les alcoxysilanes tels que le diméthyl-diméthoxysilane, le diméthylvinyléthoxysilane, le triméthylméthoxysilane. Lors de ce traitement, les silices peuvent accroître leur poids de départ jusqu'à un taux de 20 %.

On peut généralement utiliser de 0,5 à 60 % en poids, de préférence de 10 à 25 % en poids de charge, par rapport au poids de la phase silicone de la formule.

La composition de l'émulsion silicone peut être par exemple la suivante :

A) une huile polydiméthylsiloxane bloquée à chacune des extrémités des chaînes par un motif $(CH_3)_2ViSiO_{1/2}$,
B) une huile poly(diméthyl) (hydrogénométhyl) siloxane bloquée à chacune des extrémités des chaînes par un motif $(CH_3)_2HSiO_{1/2}$,
C) au moins un tensio-actif non-ionique,
(c') un alkyl-siloxane modifié par un polyepoxide d'alkylène, et de préférence l'heptaméthyltrisiloxane modifié polyalkyléneoxide.
D) un catalyseur de réticulation à base de platine,
E) de 20 à 80 % en poids de carbonate de calcium, par rapport au poids sec de la couche externe après réticulation ayant une granulométrie d50 comprise entre 1 et 10 $\mu$m,
F) de l'eau,
G) éventuellement une résine polyorganosiloxane, notamment de type $MD^{vi}Q$, éventuellement en solution dans une huile polydiméthylsiloxane bloquée à chacune des extrémités des chaînes par un motif $(CH_3)_2ViSiO_{1/2}$,
H) éventuellement au moins un inhibiteur de réticulation,
I) éventuellement au moins un promoteur d'adhérence choisi dans le groupe comprenant : au moins un hydrocolloïde protecteur, de préférence l'alcool polyvinylique, lequel peut également jouer le rôle de tensioactif en combinaison ou non avec d'autres émulsifiants ; des silanes ou polyorganosiloxanes spécifiques, à savoir hydroxylés et amino-salifiés ; un hydrocolloïde protecteur, de préférence de l'alcool polyvinylique, et des silanes et/ou polyorganosilixanes hydroxylés et amino-salifiés,
J) éventuellement au moins un additif de formulation.

L'émulsion silicone aqueuse selon l'invention est du type de celle réticulable par polyaddition à température ambiante (EVF ou RTV), sachant que cette réticulation catalysée par le platine peut être activée thermiquement (100-200°C).

Cette émulsion permet d'obtenir des tissus enduits d'élastomères silicones en couches minces, hydrofuges ayant de bonnes propriétés mécaniques de souplesse, de résistance à la déchirure et à l'effilochage et dégageant peu de chaleur en cas de combustion.

La phase silicone de l'émulsion selon l'invention comprend des POS destinés à générer l'élastomère par réticulation/durcissement à température ambiante (23°C) selon un mécanisme de polyaddition. Il est possible d'accélérer la réticulation par activation thermique à une température supérieure à l'ambiante. Les élastomères dit vulcanisables à froid de polyaddition et les élastomères vulcanisables à chaud de polyaddition entrent dans le cadre de l'invention.

L'émulsion aqueuse peut être réalisée à température ambiante (25°C) et à pression atmosphérique.

L'émulsion aqueuse de POS telle que définie ci-dessus, peut être réaliser par une mise en émulsion par introduction dans un même réacteur des constituants (A) à (J).

On peut également produire cette émulsion par mélange de pré-émulsions qui sont chacune inaptes à réticuler séparément du fait qu'elles ne présentent pas toutes les espèces réactives et le catalyseur nécessaire pour la polyaddition (notamment POS ≡SiVi + POS ≡SiH + catalyseur).

Par exemple on peut réaliser une émulsion contenant les ≡SiVi et les ≡SiH et éventuellement l'inhibiteur, et une émulsion catalysante à base de platine et d'huile ≡SiVi, qui seront associées lors de la confection du bain pour le revetement. Ceci facilite grandement l'obtention d'une émulsion stable selon l'invention et qui peut être aisément préparée dans des conditions industrielles.

Ainsi, on peut réaliser les pré-émulsions suivantes :

- une pré-émulsion comme base du POS (A),
- une pré-émulsion comme base du POS (B) (émulsion réticulante), et/ou
- une pré-émulsion comme base du catalyseur (D) (émulsion catalysante) constitué par exemple d'une émulsion aqueuse d'un catalyseur au platine dilué dans une huile silicone vinylée ;

On mélange alors ces pré-émulsions. L'une ou l'autre des pré-émulsions mentionnés précédemment pouvant renfermer, en outre, le tensioactif (C), les charges (E), et les autres composants éventuels (G)-(J).

L'émulsion catalysante peut être ajoutée aux autres émulsions silicones (notamment celle à base de SiH) lors de la formulation du bain, avant application sur l'article.

Le tensioactif (C) peut être mis en émulsion par voie directe, ie. on coule la phase silicone dans la solution aqueuse contenant le tensioactif, ou en phase inverse.

Le promoteur d'adhérence (I) peut être ajouté a tout moment, notamment lors de la préparation du bain.

La couche interne (1), en contact avec le support fibreux est à base de composition silicone élastomère. Divers types de ces compositions peuvent être utilisés.

Il est possible d'utiliser une grande variété de compositions organopolysiloxanes multicomposantes, bicomposantes ou monocomposantes réticulant à température ambiante ou à la chaleur par des réactions, notamment, de polyaddition, d'hydrosilylation ou radicalaire pour produire un élastomère. Comme réaction de polyaddition, on cite notamment la réaction de groupements hydrogénosilylés sur des groupements alcénylsilylés, en présence généralement d'un catalyseur métallique, de préférence au platine (voir par exemple dans les brevets US-A-3 220 972, 3 284 406, 3 436 366, 3 697 473 et 4 340 709).

On peut notamment citer une composition silicone élastomère obtenue par réticulation d'un mélange de polyorganosiloxane susceptible de réticuler par des réactions de polyaddition comprenant au moins :

- un polyorganosiloxane présentant, par molécule, au moins deux groupes alcényles, en C2-C6 liés au silicium,
- un polyorganosiloxane présentant, par molécule, au moins deux atomes d'hydrogène liés au silicium, et
- en présence d'un quantité efficace de catalyseur de réticulation à base de platine.

Ces polyorganosiloxanes peuvent être les même que ceux décrits précédemment pour la couche externe (2). La composition peut également comprendre les différents additifs utilisés pour la formation de la couche externe (2).

La composition silicone élastomère comprend préférentiellement des charges de renforts, tels que celles décrites précédemment, notamment des résines polyorganosiloxanes, et/ou de la silice préférentiellement traitée, plus préférentiellement dans des proportions comprises entre 5 et 50% de la couche interne.

La présente invention a aussi pour objet un procédé de revêtement d'un support fibreux, dans lequel :

- on dépose sur la surface d'un support fibreux une composition silicone élastomère réticulable par réactions de polyaddition, d'hydrosilylation ou radicalaire ; et on procède éventuellement à sa réticulation pour former la couche interne (1), notamment par séchage ; et
- on dépose, sur la couche interne (1), l'émulsion aqueuse de polyorganosiloxane reticulable par réaction de polyaddition définie précédemment, et on procède à sa réticulation de manière à former la couche externe (2), notamment par séchage, de manière à ce que ladite couche externe ait une masse surfacique comprise entre 1 et 20 g/m$^2$.

Les étapes de dépôt sont avantageusement effectuées par enduction. L'étape d'enduction peut notamment être réalisée en utilisant une racle, en particulier une racle sur cylindre, une racle en l'air ou une racle sur tapis, par transfert, par foulardage, c'est-à-dire par exprimage entre deux rouleaux, ou encore par rouleau lécheur, cadre rotatif, rouleau inverse "reverse roll", et/ou pulvérisation. Pour l'application de la couche externe un cylindre gravé ou un cylindre de transfert sont particulièrement utiles.

On procède ensuite au séchage et à la réticulation, de préférence par air chaud ou rayonnement electromagnétique, par exemple infra-rouges, notamment de 10 secondes à 5 minutes, préférentiellement de 10 à 60 secondes, à une température de réticulation sans dépasser la température de dégradation du support fibreux.

Il est à noter que l'on peut réticuler ou non la composition appliquée pour former la couche interne (1) avant de déposer la composition pour la couche externe (2). Dans le cas ou la composition appliquée pour former la couche interne (1) n'est pas réticulée, sa réticulation sera effectuée lorsque l'on procédera à la réticulation de la composition pour former la couche externe (2).

La quantité de composition silicone élastomère appliquée est telle qu'elle permet la formation d'une couche interne (1) ayant une masse surfacique comprise entre 10 et 200 $g/m^2$, préférentiellement comprise entre 40 et 120 $g/m^2$. On visera en général une épaisseur déposée finale après réticulation comprise entre 30 et 70 $\mu$m.

La quantité d'émulsion aqueuse de polyorganosiloxane reticulable par réaction de polyaddition appliquée est telle qu'elle permet la formation d'une couche externe (2) ayant une masse surfacique comprise entre 1 et 20 $g/m^2$, préférentiellement compris entre 5 et 15 $g/m^2$. On visera en général une épaisseur déposée finale après réticulation comprise entre 1 et 15 $\mu$m, préférentiellement entre 2 et 10, plus préférentiellement encore entre 3 et 9 $\mu$m, notamment 4, 5, 6 et 7 $\mu$m.

Dans le cadre des sacs de protection gonflable de type « air bag » tissés en une pièce (« one pièce woven »), le revêtement silicone objet de l'invention est effectué sur la surface extérieur dudit sac, en contact avec l'utilisateur ou les divers éléments du véhicule.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

## PARTIE EXPERIMENTALE

Dans ces exemples, la viscosité est mesurée à l'aide d'un viscosimètre BROOKFIELD selon les indications de la norme AFNOR NFT-76-106 de mai 82.

Dans les exemples suivants on utilise les composants définis ci-dessous :

- POS A : huile polydiméthylsiloxane bloquée à chacune des extrémités des chaînes par un motif $(CH_3)_2ViSiO_{1/2}$, ayant une viscosité de 60000 mPa.s.
- POS B : huile poly(diméthyl) (hydrogénométhyl) siloxane bloquée à chacune des extrémités des chaînes par un motif $(CH_3)_2HSiO_{1/2}$, ayant une viscosité de 25 mPa.s et contenant au total 0,7 fonction Si-H pour 100 g d'huile (dont 0,6 fonction Si-H situé dans la chaîne).
- Résine G : résine $MD^{vi}Q$ en solution dans une huile polydiméthylsiloxane bloquée à chacune des extrémités des chaînes par un motif $(CH_3)_2ViSiO_{1/2}$, de viscosité 60000 mPa.s, comprenant 0,7% de vinyls en poids.
- Catalyseur (D) : platine métal, introduit sous la forme d'un complexe organométallique à 10 % en poids de platine métal, connu sous le nom de catalyseur de Karstedt.
- Inhibiteur (H) : Ethynylcyclohexanol 1 (ECH).
- Tensio-Actif (C) 1 : solution aqueuse à 10% d'alcool polyvinylique 25/140 (viscosité en solution à 4% / indice d'ester) de marque Rhodoviol®. Cette solution joue également le rôle de promoteur d'adhérence (I).
- Tensio-Actif (C) 2 : heptaméthyltrisiloxane modifié polyalkylèneoxide.
- Charge (E) : carbonate de calcium, référence albacar© 5970, n'ayant pas été l'objet d'un traitement de compatibilisation (chauffage ou fonctionnalisation de surface), de granulométrie d50 de 2 $\mu$m.

## Exemple 1 : Préparation des émulsions réticulantes R

Dans le Tableau 1 sont mentionnées les différentes compositions pondérales de l'émulsion réticulante (en g) :

**Tableau 1**

|  | CR1 | CR2 | R3 | R4 | R5 |
|---|---|---|---|---|---|
| POSA | 27 | 27 | 27 | 27 | 27 |
| Résine G | 27 | 27 | 27 | 27 | 27 |
| POS B | 2,5 | 2,5 | 2,5 | 2,5 | 2,5 |
| ECH | 0,06 | 0,06 | 0,06 | 0,06 | 0,06 |
| TA1 | 15 | 15 | 15 | 15 | 15 |
| TA2 | 0 | 2 | 2 | 2 | 2 |
| Charge (E) | 0 | 0 | 50 | 25 | 75 |
| Acide sorbique | 0,02 | 0,02 | 0,02 | 0,02 | 0,02 |
| Eau | 28 | 28 | 28 | 28 | 28 |
| CR1 et CR2 sont des compositions comparatives. | | | | | |

Dans un réacteur IKA de laboratoire, muni d'une ancre raclante et d'un socle (refroidi par circulation d'eau froide), on introduit TA1 et l'acide sorbique. On coule alors la résine G sous agitation pendant 170min. On coule ensuite POS A dans laquelle a été prédispersé l'ECH, pendant 150min. On ajoute alors un rotor-stator ultra-turrax (IKA) et cisaille l'émulsion pendant 90min, 20min à 16.000 tr/min puis 70min à 13.000 tr/min. La température finale est de 28,6°C. La granulométrie moyenne est de 3 microns. On coule ensuite POS B pendant 20min. L'émulsion est alors diluée par ajout progressif d'eau déminéralisée pendant 60min.

On additive ensuite TA2 puis la charge (E) et on remue pour homogénéiser.

## Exemple 2 : Préparation de l'émulsion catalysante C

Cette émulsion comprend 53 % en poids de POS A, 28 % en poids de TA1, 0,45 % en poids de catalyseur, et 17,5 % en poids d'eau.

## Exemple 3 : Préparation des tissus enduits

Le tissu est un tissu polyamide chaîne et trame 470dtex, 18fils par centimètres. Il a été enduit d'une couche interne (1) de silicone de masse surfacique de 65g/m$^2$ de Rhodorsil TCS 7510 de Rhodia Silicones. La couche interne (1) présente une épaisseur de 60 $\mu$m.

Le mélange des quantités de préparations réticulantes et catalysantes indiquées dans le Tableau 2, plus éventuellement de l'eau de dilution pour ajuster la viscosité et la concentration du bain en vue de régler la quantité de silicone déposée sur le tissu, est réalisé lors de la constitution du bain d'enduction, avant application sur le tissu.

Le bain d'enduction est appliqué sur le tissu déjà enduit par la couche interne de silicone, à la barre de Meyer numéro 3. Ensuite, le tissu enduit est passé dans une enceinte chauffante ventilée selon les conditions précisées dans le tableau 2.

Caractérisation des tissus enduits

- Mouillage : il est tout d'abord apprécié visuellement si l'émulsion appliquée pour la couche externe de silicone s'étale bien sur la couche interne de silicone. La formation d'un film uniforme de silicone conduit à la mention OK.
- Dépôt : Les tissus sont pesés avant enduction puis après séchage de la couche externe de silicone pour apprécier le poids de la couche externe déposée.
- Epaisseur moyenne de la couche externe (2) : Les tissus enduits sont coupés de manière transversale et la section obtenue est observé au microscope électronique à balayage.
- Coefficients de frottement dynamique Kd : ils sont mesurés à l'aide d'une machine d'essais universelle utilisée pour des tests de traction, dont la traverse tire un patin de 200g sur un plan horizontal recouvert d'une peau de chamois ou d'une plaque propre en verre. Le patin est habillé par l'échantillon de tissu enduit à tester, face silicone du côté du plan horizontal revêtu de la peau de chamois ou de la plaque en verre. Le Kd met en évidence l'aptitude de l'échantillon à glisser sur la surface proposée. Plus la valeur obtenue est faible, plus la force nécessaire pour faire glisser le matériau est faible.

- Test Scrub : Ce test de résistance au froissement et à l'abrasion (norme ISO 5981 A) reflète l'adhérence et la tenue au vieillissement de la composition. Ce test consiste à soumettre le tissu, d'une part, à un mouvement de cisaillement à l'aide de deux mâchoires pinçant les deux bords opposés d'une éprouvette et animées d'un mouvement alternatif l'une par rapport à l'autre et, d'autre part, à une abrasion par contact avec un support mobile. Comme unité, on utilise le froissement (1 froissement = ½ cycle).

Tableau 2

|  | Emulsion R | Emulsion C | Eau de dilution | Réticulation | Dépôts | Proportion de charges (E) dans la couche (2) | Epaisseur de la couche (2) | Observation mouillage immédiat | Kd chamois | Kd verre | Test Scrub |
|---|---|---|---|---|---|---|---|---|---|---|---|
|  | g | G | g | °C/min | g/m$^2$ | % en poids | $\mu$m | film uniforme |  |  | fr. |
| C0 | 0 | 0 | 0 | - |  | 0 | 0 | - | 3 | 1,5 | >1000 |
| C1 | 100g CR1 | 10 | 0 | 120 / 2 | 7 | 0 | 7 | Non OK | 3 | 2 | - |
| C2 | 102g CR2 | 10 | 0 | 120 / 2 | 10 | 0 | 10 | Non OK | - | - | - |
| 3 | 152g R3 | 10 | 0 | 120 / 2 | 20 | 43,2 | 11,5 | OK | 0,5 | - | - |
| 4 | 152g R3 | 10 | 0 | 120 / 2 | 10 | 43,3 | 5,8 | OK | 0,7 | - | >1000 |
| 5 | 177g R4 | 5 | 50 | 180 / 1 | 5 | 44,3 | 3,4 | OK | 0,8 | 0,8 | >1000 |
| 6 | 202g R3 | 5 | 50 | 180 / 1 | 8 | 28,4 | 4,6 | OK | 0,9 | 0,4 | >1000 |
| 7 | 227g R5 | 3 | 50 | 180 / 1 | 8 | 54,8 | 4,1 | OK | 0,8 | 0,6 | >1000 |
| C0, C1 et C2 sont des exemples comparatifs. | | | | | | | | | | | |

**Exemple 4) : Enduction d'un tissus « one piece woven » et mesure d'étanchéité**

Un échantillon de tissu "one pièce woven" (communément appelé "T-bag") est enduit dans un premier temps d'une couche interne (1) d'élastomère silicone liquide. Puis, une couche externe d'émulsion est appliquée dans un second temps.

L'enduction de la couche interne (1) est réalisée sur une ligne pilote (Rotary) d'enduction continue de laboratoire, à l'aide d'une râcle en 1 à 2m/min, suivie d'un passage en ligne dans un four à 180°C. La masse surfacique de la couche interne (1) déposée est de 60 g/m$^2$ sur chaque face.

Une émulsion comprenant 100 g d'émulsion R5, 5 g d'émulsion C et 50 g d'eau est ensuite appliquée sur la même ligne à l'aide d'un cylindre gravé baignant dans un bain d'émulsion, le tissu étant ensuite essoré par une barre de Meyer. L'enduction s'effectue à 4m/min et après passage dans un four à 170°C. une couche externe (2) est obtenue de masse surfacique 10 g/m$^2$.

Ces sacs enduits sont soumis à un test de perméabilité dynamique. Au cours de ce test, une enceinte close préalablement pressurisée est mise instantanément en contact avec l'intérieur du sac via une électrovanne. Une pression de 1 bar existe à cet instant dans le réservoir et le sac "one pièce woven" enduit de silicone. Le système est alors isolé, les fuites ne pouvant s'effectuer qu'à travers la surface enduite du sac. L'étanchéité est caractérisée par le temps mis par la pression pour décroître de 1 bar à 1,5 bar. Ce test est particulièrement agressif du fait de la mise sous pression brutale du sac et de la pression utilisée plus importante que dans les tests usuels de perméabilité.

5 secondes sont nécessaires pour le sac comprenant uniquement l'enduction de la couche interne (1). A contrario, 18 secondes sont nécessaires pour le sac comprenant la couche interne (1) et la couche externe (2).

## Revendications

1. Article comprenant au moins une surface de support fibreux revêtue par au moins deux couches successive de type silicone :

   - une couche interne (1), en contact avec le support fibreux, à base de composition silicone élastomère; et
   - une couche externe (2), ayant une masse surfacique comprise entre 1 et 20 g/m$^2$, en contact avec la couche interne (1), obtenue par réticulation d'une émulsion aqueuse de polyorganosiloxane reticulable par réaction de polyaddition, ledit article étant **caractérisé en ce que** :

   a) il est obtenu par un procédé dans lequel :

   - on dépose sur la surface d'un support fibreux une composition silicone élastomère réticulable par réactions de polyaddition, d'hydrosilylation ou radicalaire ; et on procède éventuellement à sa réticulation pour former la couche interne (1), notamment par séchage ; et
   - on dépose, sur la couche Interne (1), l'émulsion aqueuse de polyorganosiloxane reticulable par réaction de polyaddition définie précédemment, et on procède à sa réticulation de manière à former la couche externe (2), notamment par séchage, de manière à ce que ladite couche externe ait une masse surfacique comprise entre 1 et 20 g/m$^2$, et

   b) ladite émulsion aqueuse de polyorganosiloxane reticulable par réaction de polyaddition comprend :

   A) au moins un polyorganosiloxane présentant par molécule au moins deux groupements fonctionnels insaturés de type alcényle en $C_2$-$C_6$, liés au silicium, (B) au moins un polyorganosiloxane présentant par molécule au moins deux atomes d'hydrogène liés au silicium,
   (C) au moins un tensioactif,
   (C') un alkyl-siloxane modifié par un polyoxide d'alkylène, et de préférence l'heptaméthyltrisiloxane modifié polyalkylèneoxide.
   (D) au moins un catalyseur de réticulation,
   (E) au moins 10 à 80 % en poids d'une charge, par rapport au poids sec de la couche externe après réticulation, ladite charge présente une granulométrie d50 comprise entre 0,5 et 50 $\mu$m, et
   (F) de l'eau,
   (G) éventuellement au moins une résine polyorganosiloxane comportant éventuellement au moins un groupement alcényle,
   (H) éventuellement au moins un inhibiteur de réticulation,
   (I) éventuellement au moins un promoteur d'adhérence, et

(J) éventuellement au moins un additif de formulation.

2. Article selon la revendication 1, caractérisé en ce le catalyseur de réticulation (D) consiste en au moins un métal, ou composé, du groupe du platine.

3. Article selon la revendication 1 ou 2, **caractérisé en ce que** la charge (E) est comprises dans le groupe comprenant : les silices, le carbonate de calcium, le quartz broyé, les argiles calcinées, les terres de diatomées, le noir de carbone, le dioxyde de titane, l'oxyde d'aluminium, l'alumine hydratée, la vermiculite expansée, la vermiculite non expansée, l'oxyde de zinc, le mica, le talc, l'oxyde de fer, le sulfate de baryum et la chaux éteinte.

4. Article selon l'une quelconque des revendications 1 à 3, **caractérisé en ce que** l'émulsion aqueuse silicone comprend de 30 à 50 % de charge (E), par rapport au poids sec de la couche externe après réticulation.

5. Article selon l'une quelconque des revendications 1 à 4, **caractérisé en ce que** la charge (E) présente une granulométrie d50 comprise entre 1 et 10 $\mu$m.

6. Article selon l'une quelconque des revendications 1 à 5, **caractérisé en ce que** l'émulsion aqueuse comprend au moins un tensio-actif (C) non ionique.

7. Article selon l'une quelconque des revendications 1 à 6, **caractérisé en ce que** l'émulsion aqueuse comprend au moins un tensio-actif (C) non ionique choisi dans le groupe comprenant : les acides gras alcoxylés, les alcools polyvinyliques, les alkylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène, les alkylglucosides, les alkylpolyglucosides, les sucroéthers, les sucroesters, les sucroglycérides, les esters de sorbitan, et les composés éthoxylés de ces dérivés de sucres.

8. Article selon l'une quelconque des revendications 1 à 7, **caractérisé en ce que** la composition de l'émulsion silicone comprend :

   A) une huile polydiméthylsiloxane bloquée à chacune des extrémités des chaînes par un motif $(CH_3)_2ViSiO_{1/2}$,
   B) une huile poly(diméthyl) (hydrogénométhyl) siloxane bloquée à chacune des extrémités des chaînes par un motif $(CH_3)_2HSiO_{1/2}$,
   C) au moins un tensio-actif non-ionique,
   D) un catalyseur de réticulation à base de platine,
   E) de 10 à 80 % en poids de carbonate de calcium, par rapport au poids sec de la couche externe après réticulation ayant une granulométrie d50 comprise entre 1 et 10 $\mu$m,
   F) de l'eau,
   G) éventuellement une résine polyorganosiloxane, notamment de type $MD^{vi}Q$, éventuellement en solution dans une huile polydiméthylsiloxane bloquée à chacune des extrémités des chaînes par un motif $(CH_3)_2V_iSiO_{1/2}$,
   H) éventuellement au moins un inhibiteur de réticulation,
   I) éventuellement au moins un promoteur d'adhérence choisi dans le groupe comprenant: au moins un hydrocolloïde protecteur, de préférence l'alcool polyvinylique, lequel peut également jouer le rôle de tensioactif en combinaison ou non avec d'autres émulsifiants ; des silanes ou polyorganosiloxanes spécifiques, à savoir hydroxylés et amino-salifiés ; un hydrocolloïde protecteur, de préférence de l'alcool polyvinylique, et des silanes et/ou polyorganosilixanes hydroxylés et amino-salifiés,
   I) éventuellement au moins un additif de formulation.

9. Article selon l'une quelconque des revendications 1 à 8, **caractérisé en ce que** l'émulsion aqueuse formant la couche externe (2) est une composition polyorganosiloxane multicomposante, bicomposante ou monocomposante réticulant à température ambiante ou à la chaleur par des réactions de polyaddition, pour produire un élastomère.

10. Article selon l'une quelconque des revendications 1 à 9, **caractérisé en ce que** la composition silicone élastomère de la couche interne (1) est une composition organopolysiloxane multicomposante, bicomposante ou monocomposante réticulant à température ambiante ou à la chaleur par des réactions de polyaddition, d'hydrosilylation ou radicalaire pour produire un élastomère.

11. Article selon l'une quelconque des revendications 1 à 10, **caractérisé en ce que** la couche interne (1) présente une masse surfacique comprise entre 10 et 200 g/m$^2$, préférentiellement compris entre 40 et 120 g/m$^2$.

**12.** Article selon l'une quelconque des revendications 1 à 11, **caractérisé en ce que** la couche interne (1) présente une épaisseur, après réticulation, comprise entre 30 et 70 $\mu$m.

**13.** Article selon l'une quelconque des revendications 1 à 12, **caractérisé en ce que** la couche externe (2) présente une masse surfacique comprise entre 5 et 15 g/m$^2$.

**14.** Article selon l'une quelconque des revendications 1 à 13, **caractérisé en ce que** la couche externe (2) présente une épaisseur, après réticulation, comprise entre 1 et 15 $\mu$m.

**15.** Article selon l'une quelconque des revendications 1 à 14, **caractérisé en ce que** le support fibreux est choisi parmi le groupe comprenant : les sacs gonflables utilisés pour la protection des occupants d'un véhicule, les tresses de verre, les bandes transporteuses, les tissus coupe-feu, les isolants thermiques, les compensateurs, les vêtements, les matériaux souples destinés à être utilisés dans l'architecture textile intérieure ou extérieure.

**16.** Article selon l'une quelconque des revendications 1 à 15, **caractérisé en ce que** le support fibreux est un sacs de protection gonflable pour la protection des occupants d'un véhicule tissé en une pièce ; et que le revêtement silicone constitué par les couches (1) et (2) est situé sur la surface extérieur dudit sac, en contact avec l'utilisateur ou les divers éléments du véhicule.

**17.** Procédé de revêtement d'un support fibreux pour l'obtention d'un article selon l'une quelconque des revendications 1 à 16, dans lequel :

- on dépose sur la surface d'un support fibreux une composition silicone élastomère réticulable par réactions de polyaddition, d'hydrosilylation ou radicalaire ; et on procède éventuellement à sa réticulation pour former la couche interne (1), notamment par séchage ; et
- on dépose, sur la couche interne (1), l'émulsion aqueuse de polyorganosiloxane reticulable par réaction de polyaddition définie précédemment, et on procède à sa réticulation de manière à former la couche externe (2), notamment par séchage, de manière à ce que ladite couche externe ait un poids compris entre 1 et 20 g/m$^2$.

**18.** Procédé selon la revendication 17, **caractérisé en ce que** les dépôts des couches (1) et (2) sont effectuée par enduction.

**19.** Procédé selon la revendication 17 ou 18, **caractérisé en ce que** le séchage est effectué par air chaud ou rayonnement electro-magnétique.

**Claims**

**1.** Article comprising at least one fibrous support surface coated by at least two successive layers of silicone type:

- an inner layer (1), in contact with the fibrous support, based on a silicone elastomer composition; and
- an outer layer (2), having a surface density between 1 and 20 g/m$^2$, in contact with the inner layer (1), obtained by crosslinking an aqueous emulsion of a polyorganosiloxane that can be crosslinked by polyaddition reaction,

said article being **characterized in that**:

a) it is obtained by a process in which:

- deposited on the surface of a fibrous support is a silicone elastomer composition that can be crosslinked by polyaddition, hydrosilylation or radical reactions; and it is optionally crosslinked to form the inner layer (1), especially by drying; and
- deposited on the inner layer (1) is the aqueous emulsion of a polyorganosiloxane that can be crosslinked by polyaddition reaction defined previously, and it is crosslinked so as to form the outer layer (2), especially by drying, so that said outer layer has a surface density between 1 and 20 g/m$^2$, and

b) said aqueous emulsion of a polyorganosiloxane that can be crosslinked by polyaddition reaction comprises:

(A) at least one polyorganosiloxane having, per molecule, at least two unsaturated functional groups of

$C_2$-$C_6$ alkenyl type, bonded to the silicon;
(B) at least one polyorganosiloxane having, per molecule, at least two hydrogen atoms bonded to the silicon;
(C) at least one surfactant;
(C') an alkylsiloxane modified by a polyalkylene oxide, and preferably heptamethyltrisiloxane modified by a polyalkylene oxide;
(D) at least one crosslinking catalyst;
(E) at least 10 to 80 wt% of a filler, relative to the dry weight of the outer layer after crosslinking, said filler has a $d_{50}$ particle size between 0.5 and 50 $\mu$m; and
(F) water;
(G) optionally at least one polyorganosiloxane resin optionally comprising at least one alkenyl group;
(H) optionally at least one crosslinking inhibitor;
(I) optionally at least one adhesion promoter; and
(J) optionally at least one formulation additive.

2. Article according to Claim 1, **characterized in that** the crosslinking catalyst (D) consists of at least one metal, or compound, from the platinum group.

3. Article according to Claim 1 or 2, **characterized in that** the filler (E) is included in the group comprising: silicas, calcium carbonate, ground quartz, calcined clays, diatomaceous earths, carbon black, titanium dioxide, aluminum oxide, hydrated alumina, expanded vermiculite, unexpanded vermiculite, zinc oxide, mica, talc, iron oxide, barium sulfate and flaked lime.

4. Article according to any one of Claims 1 to 3, **characterized in that** the aqueous silicone emulsion comprises from 30 to 50% of filler (E), relative to the dry weight of the outer layer after crosslinking.

5. Article according to any one of Claims 1 to 4, **characterized in that** the filler (E) has a $d_{50}$ particle size between 1 and 10 $\mu$m.

6. Article according to any one of Claims 1 to 5, **characterized in that** the aqueous emulsion comprises at least one nonionic surfactant (C).

7. Article according to any one of Claims 1 to 6, **characterized in that** the aqueous emulsion comprises at least one nonionic surfactant (C) chosen from the group comprising: alkoxylated fatty acids, polyvinyl alcohols, polyalkoxylated alkylphenols, polyalkoxylated fatty alcohols, polyalkoxylated or polyglycerolated fatty amides, polyglycerolated alcohols and $\alpha$-diols, ethylene oxide/propylene oxide block polymers, alkyl glucosides, alkyl polyglucosides, sucrose ethers, sucrose esters, sucroglycerides, sorbitan esters, and ethoxylated compounds of these sugar derivatives.

8. Article according to any one of Claims 1 to 7, **characterized in that** the composition of the silicone emulsion comprises:

A) a polydimethylsiloxane oil terminated at each of the chain ends by a $(CH_3)_2ViSiO_{1/2}$ unit;
B) a poly(dimethyl)(hydromethyl)siloxane oil terminated at each of the chain ends by a $(CH_3)_2HSiO_{1/2}$ unit;
C) at least one nonionic surfactant;
D) a platinum-based crosslinking catalyst;
E) from 10 to 80 wt% of calcium carbonate, relative to the dry weight of the outer layer after crosslinking that has a $d_{50}$ particle size between 1 and 10 $\mu$m;
F) water;
G) optionally a polyorganosiloxane resin, especially of $MD^{vi}Q$ type, optionally in solution in a polydimethylsiloxane oil terminated at each of the chain ends by a $(CH_3)_2ViSiO_{1/2}$ unit;
H) optionally at least one crosslinking inhibitor;
I) optionally at least one adhesion promoter chosen from the group comprising: at least one protective hydrocolloid, preferably polyvinyl alcohol, which may also act as a surfactant possibly in combination with other emulsifiers; specific silanes or polyorganosiloxanes, namely which are hydroxylated and amino-salified; a protective hydrocolloid, preferably polyvinyl alcohol, and hydroxylated and amino-salified silanes and/or polyorganosiloxanes; and
J) optionally at least one formulation additive.

9. Article according to any one of Claims 1 to 8, **characterized in that** the aqueous emulsion forming the outer layer (2) is a multicomponent, two-component or one-component polyorganosiloxane composition that crosslinks at ambient temperature or at high temperature via polyaddition reactions to produce an elastomer.

10. Article according to any one of Claims 1 to 9, **characterized in that** the silicone elastomer composition of the inner layer (1) is a multicomponent, two-component or one-component organopolysiloxane composition that crosslinks at ambient temperature or at high temperature via polyaddition, hydrosilylation or radical reactions to produce an elastomer.

11. Article according to any one of Claims 1 to 10, **characterized in that** the inner layer (1) has a surface density between 10 and 200 g/m$^2$, preferably between 40 and 120 g/m$^2$.

12. Article according to any one of Claims 1 to 11, **characterized in that** the inner layer (1) has a thickness, after crosslinking, between 30 and 70 $\mu$m.

13. Article according to any one of Claims 1 to 12, **characterized in that** the outer layer (2) has a surface density between 5 and 15 g/m$^2$.

14. Article according to any one of Claims 1 to 13, **characterized in that** the outer layer (2) has a thickness, after crosslinking, between 1 and 15 $\mu$m.

15. Article according to any one of Claims 1 to 14, **characterized in that** the fibrous support is chosen from the group comprising: airbags used for protecting the occupants of a vehicle, glass braids, conveyor belts, fire-resistant fabrics, thermal insulation, compensators, clothing, flexible materials intended to be used in interior or exterior textile architecture.

16. Article according to any one of Claims 1 to 15, **characterized in that** the fibrous support is a one-piece woven airbag for protecting the occupants of a vehicle; and that the silicone coating made up of the layers (1) and (2) is located on the outer surface of said airbag, in contact with the user or the various components of the vehicle.

17. Process for coating a fibrous support in order to obtain an article according to any one of Claims 1 to 16, in which:

   - deposited on the surface of a fibrous support is a silicone elastomer composition that can be crosslinked by polyaddition, hydrosilylation or radical reactions; and it is optionally crosslinked to form the inner layer (1), especially by drying; and
   - deposited on the inner layer (1) is the aqueous emulsion of a polyorganosiloxane that can be crosslinked by polyaddition reaction defined previously, and it is crosslinked so as to form the outer layer (2), especially by drying, so that said outer layer has a surface density between 1 and 20 g/m$^2$.

18. Process according to Claim 17, **characterized in that** the depositions of layers (1) and (2) are carried out by coating.

19. Process according to Claim 17 or 18, **characterized in that** the drying is carried out by hot air or electromagnetic radiation.

**Patentansprüche**

1. Gegenstand, umfassend mindestens eine Oberfläche eines faserhaltigen Trägers, der mit mindestens zwei übereinanderliegenden Schichten vom Typ Silicon beschichtet ist:

   - eine innere Schicht (1), die mit dem faserhaltigen Träger in Kontakt ist, auf der Basis einer Siliconelastomerzusammensetzung; und
   - eine äußere Schicht (2), die eine flächenbezogene Masse im Bereich zwischen 1 und 20 g/m$^2$ aufweist, die in Kontakt mit der inneren Schicht (1) ist, erhalten mittels Vernetzung einer wässrigen Polyorganosiloxanemulsion, die mittels Polyadditionsreaktion vernetzbar ist, wobei der Gegenstand **dadurch gekennzeichnet ist, dass**:

      a) er durch ein Verfahren erhalten wird, bei dem:

- auf der Oberfläche eines faserhaltigen Trägers eine Siliconelastomerzusammensetzung abgelagert wird, die mittels Polyadditionsreaktion, Hydrosilylierungsreaktion oder Radikalreaktion vernetzbar ist; und gegebenenfalls deren Vernetzung erfolgt, um die innere Schicht (1), insbesondere mittels Trocknen, zu bilden; und

- auf der inneren Schicht (1) die wässrige Polyorganosiloxanemulsion, die mittels der zuvor definierten Polyadditionsreaktion vernetzbar ist, abgelagert wird und ihre Vernetzung erfolgt, um die äußere Schicht (2), insbesondere mittels Trocknen, zu bilden, damit die äußere Schicht eine flächenbezogene Masse im Bereich zwischen 1 und 20 g/m$^2$ aufweist, und

b) die wässrige Polyorganosiloxanemulsion, die mittels Polyadditionsreaktion vernetzbar ist, Folgendes umfasst:

A) mindestens ein Polyorganosiloxan, das pro Molekül mindestens zwei ungesättigte funktionelle Gruppen des Typs $C_2$-$C_6$-Alkenyl, gebunden an Silicium, aufweist,
B) mindestens ein Polyorganosiloxan, das pro Molekül mindestens zwei Wasserstoffatome, gebunden an Silicium, aufweist,
(C) mindestens einen grenzflächenaktiven Stoff,
(C') ein mit einem Alkylenpolyoxid modifiziertes Alkylsiloxan und bevorzugt mit einem Polyalkylenoxidmodifiziertes Heptamethyltrisiloxan,
(D) mindestens einen Vernetzungskatalysator,
(E) mindestens 10 bis 80 Gew.-% eines Füllstoffs, bezogen auf das Trockengewicht der äußeren Schicht nach der Vernetzung, wobei der Füllstoff eine Granulometrie d50 im Bereich zwischen 0,5 und 50 $\mu$m aufweist, und
(F) Wasser,
(G) gegebenenfalls mindestens ein Polyorganosiloxanharz, umfassend gegebenenfalls mindestens eine Alkenylgruppe,
(H) gegebenenfalls mindestens einen Vernetzungsinhibitor,
(I) gegebenenfalls mindestens einen Haftvermittler, und
(J) gegebenenfalls mindestens ein Formulierungsadditiv.

**2.** Gegenstand nach Anspruch 1, **dadurch gekennzeichnet, dass** der Vernetzungskatalysator (D) aus mindestens einem Metall oder einer Verbindung aus der Platingruppe besteht.

**3.** Gegenstand nach Anspruch 1 oder 2, **dadurch gekennzeichnet, dass** der Füllstoff (E) in der Gruppe enthalten ist, umfassend: Kieselerden, Calciumcarbonat, gemahlenen Quarz, kalzinierte Tone, Diatomeenerden, Kohlenstoffschwarz, Titandioxid, Aluminiumoxid, hydratisiertes Aluminiumoxid, geblähtes Vermiculit, nicht geblähtes Vermiculit, Zinkoxid, Glimmer, Talk, Eisenoxid, Bariumsulfat und Löschkalk.

**4.** Gegenstand nach einem der Ansprüche 1 bis 3, **dadurch gekennzeichnet, dass** die wässrige Siliconemulsion 30 bis 50 % Füllstoff (E), bezogen auf das Trockengewicht der äußeren Schicht nach der Vernetzung umfasst.

**5.** Gegenstand nach einem der Ansprüche 1 bis 4, **dadurch gekennzeichnet, dass** der Füllstoff (E) eine Granulometrie d50 im Bereich zwischen 1 und 10 $\mu$m aufweist.

**6.** Gegenstand nach einem der Ansprüche 1 bis 5, **dadurch gekennzeichnet, dass** die wässrige Emulsion mindestens einen nicht ionischen grenzflächenaktiven Stoff (C) umfasst.

**7.** Gegenstand nach einem der Ansprüche 1 bis 6, **dadurch gekennzeichnet, dass** die wässrige Emulsion mindestens einen nicht ionischen grenzflächenaktiven Stoff (C) umfasst, ausgewählt aus der Gruppe, umfassend: alkoxylierte Fettsäuren, Polyvinylalkohole, polyalkoxylierte Alkylphenole, polyalkoxylierte Fettalkohole, polyalkoxylierte oder polyglycerinierte Fettamide, polyglycerinierte Alkohole und Alpha-Diole, Ethylenoxid-Propylenoxid-Blockpolymere, Alkylglucoside, Alkylpolyglucoside, Saccharoseether, Saccharoseester, Saccharoseglyceride, Sorbitanester und ethoxylierte Verbindungen dieser Zuckerderivate.

**8.** Gegenstand nach einem der Ansprüche 1 bis 7, **dadurch gekennzeichnet, dass** die Siliconemulsionszusammensetzung Folgendes umfasst:

A) ein Polydimethylsiloxanöl, das an jedem der Kettenenden durch eine Einheit $(CH_3)_2ViSiO_{1/2}$ blockiert ist,

B) ein Poly(dimethyl)(hydrogenomethyl)siloxanöl, das an jedem der Kettenenden durch eine Einheit $(CH_3)_2HSiO_{1/2}$ blockiert ist,

C) mindestens einen nicht ionischen oberflächenaktiven Stoff,

D) einen Vernetzungskatalysator auf Platinbasis,

E) 10 bis 80 Gew.-% Calciumcarbonat, bezogen auf das Trockengewicht der äußeren Schicht nach der Vernetzung, das eine Granulometrie d50 im Bereich zwischen 1 und 10 $\mu$m aufweist,

F) Wasser,

G) gegebenenfalls ein Polyorganosiloxanharz, insbesondere vom Typ $MD^{vi}Q$, gegebenenfalls in Lösung in einem Polydimethylsiloxanöl, das an jedem der Kettenenden durch eine Einheit $(CH_3)_2ViSiO_{1/2}$ blockiert ist,

H) gegebenenfalls mindestens einen Vernetzungsinhibitor,

I) gegebenenfalls mindestens einen Haftvermittler, ausgewählt aus der Gruppe, umfassend: mindestens ein schützendes Hydrokolloid, bevorzugt Polyvinylalkohol, der in Kombination mit anderen Emulgatoren oder nicht auch die Rolle des grenzflächenaktiven Stoffs spielen kann; spezifische, nämlich hydroxylierte und aminoversalzte, Silane oder Polyorganosiloxane; ein schützendes Hydrokolloid, bevorzugt Polyvinylalkohol und hydroxylierte und aminoversalzte Silane und/oder Polyorganosiloxane,

J) gegebenenfalls mindestens ein Formulierungsadditiv.

9. Gegenstand nach einem der Ansprüche 1 bis 8, **dadurch gekennzeichnet, dass** die wässrige Emulsion, die die äußere Schicht (2) bildet, eine Multikomponenten-, Zweikomponenten- oder Einkomponenten-Polyorganosiloxanzusammensetzung ist, die bei Umgebungstemperatur oder bei Wärme durch Polyadditionsreaktionen vernetzt, um ein Elastomer zu produzieren.

10. Gegenstand nach einem der Ansprüche 1 bis 9, **dadurch gekennzeichnet, dass** die Siliconelastomerzusammensetzung der inneren Schicht (1) eine Multikomponenten-, Zweikomponenten- oder Einkomponenten-Polyorganosiloxanzusammensetzung ist, die bei Umgebungstemperatur oder bei Wärme durch Polyadditionsreaktion, Hydrosilylierungsreaktion oder Radikalreaktion vernetzt, um ein Elastomer zu produzieren.

11. Gegenstand nach einem der Ansprüche 1 bis 10, **dadurch gekennzeichnet, dass** die innere Schicht (1) eine flächenbezogene Masse im Bereich zwischen 10 und 200 $g/m^2$, vorzugsweise im Bereich zwischen 40 und 120 $g/m^2$ aufweist.

12. Gegenstand nach einem der Ansprüche 1 bis 11, **dadurch gekennzeichnet, dass** die innere Schicht (1) eine Dichte, nach Vernetzung, im Bereich zwischen 30 und 70 $\mu$m aufweist.

13. Gegenstand nach einem der Ansprüche 1 bis 12, **dadurch gekennzeichnet, dass** die äußere Schicht (2) eine flächenbezogene Masse im Bereich zwischen 5 und 15 $g/m^2$ aufweist.

14. Gegenstand nach einem der Ansprüche 1 bis 13, **dadurch gekennzeichnet, dass** die äußere Schicht (2) eine Dichte, nach Vernetzung, im Bereich zwischen 1 und 15 $\mu$m aufweist.

15. Gegenstand nach einem der Ansprüche 1 bis 14, **dadurch gekennzeichnet, dass** der faserhaltige Träger ausgewählt ist aus der Gruppe, umfassend: Luftsäcke, die zum Schutz der Insassen von Fahrzeugen verwendet werden, Glasgeflechte, Förderbänder, Brandschutzgewebe, Wärmedämmstoffe, Kompensatoren, Kleidung, flexible Materialien, die dazu bestimmt sind, als Bautextilien im Innen- oder Außenbereich verwendet zu werden.

16. Gegenstand nach einem der Ansprüche 1 bis 15, **dadurch gekennzeichnet, dass** der faserhaltige Träger ein in einem Stück gewebter Schutz-Luftsack zum Schutz der Insassen eines Fahrzeugs ist; und dadurch, dass die Siliconbeschichtung, die aus den Schichten (1) und (2) besteht, auf der äußeren Oberfläche des Sacks liegt, in Kontakt mit dem Benutzer oder den verschiedenen Elementen des Fahrzeugs.

17. Verfahren zum Beschichten eines faserhaltigen Trägers zum Erhalt eines Gegenstands nach einem der Ansprüche 1 bis 16, bei dem:

- auf der Oberfläche eines faserhaltigen Trägers eine Siliconelastomerzusammensetzung abgelagert wird, die mittels Polyadditionsreaktion, Hydrosilylierungsreaktion oder Radikalreaktion vernetzbar ist; und gegebenenfalls deren Vernetzung erfolgt, um die innere Schicht (1), insbesondere mittels Trocknen, zu bilden; und
- auf der inneren Schicht (1) die wässrige Polyorganosiloxanemulsion, die mittels der zuvor definierten Polyadditionsreaktion vernetzbar ist, abgelagert wird und ihre Vernetzung erfolgt, um die äußere Schicht (2), insbesondere mittels Trocknen, zu bilden, damit die äußere Schicht eine flächenbezogene Masse im Bereich zwischen 1 und 20 g/m$^2$ aufweist.

18. Verfahren nach Anspruch 17, **dadurch gekennzeichnet, dass** die Ablagerungen der Schichten (1) und (2) mittels Beschichtung durchgeführt werden.

19. Verfahren nach Anspruch 17 oder 18, **dadurch gekennzeichnet, dass** das Trocknen mittels Heißluft oder elektromagnetischer Strahlung durchgeführt wird.

**EP 1 979 529 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2668106 A
- GB 2383304 A
- GB 2397805 A
- US 6354620 B
- US 3220972 A
- US 3284406 A
- US 3436366 A
- US 3697473 A
- US 4340709 A
- US 3159601 A
- US 3159602 A
- EP 0057459 A
- EP 0188978 A
- EP 0190530 A
- US 3419593 A
- US 3715334 A
- US 3377432 A
- US 3814730 A
- FR 1528464 B
- FR 2372874 A

**Littérature non-brevet citée dans la description**

- **WALTER NOLL.** Chemistry and Technology of Silicones. Academic Press, 1968, 386-409